# DEMANDE DE BREVET EUROPEEN

(11) **EP 1 195 869 A1**
(43) Date de publication de la demande: **10.04.2002**
(21) Numéro de dépôt: 01420202.2
(22) Date de dépôt: 04.10.2001
(51) Int. Cl.: H02G 3/04

(54) **Chemin de câbles en treillis soudé**

(30) Priorité: 05.10.2000 FR 0012744
(71) Demandeur: Gewiss France SA, 21430 Liernais (FR)
(72) Inventeur: Bailleux, Jacques, 71400 Autun (FR)
(74) Mandataire: Myon, Gérard Jean-Pierre

(57) **Abrégé**

Ce chemin de câbles en treillis soudé (1) comporte des fils de chaîne (2) s'étendant globalement selon la direction longitudinale (X-X') du chemin de câbles et des fils de trame (3) globalement perpendiculaires à cette direction, le chemin de câbles ayant une section transversale en U, avec une base (4) et deux branches (5, 6). Les fils de chaîne constitutifs de la base (4) sont formés par des fils (21-23) à section aplatie, dont la plus grande largeur (L) est globalement perpendiculaire aux fils de chaîne (3) au niveau de la base (4).

La masse linéaire du chemin de câbles peut être diminuée sans dégradation des propriétés mécaniques du chemin de câbles.

## Description

L'invention a trait à un chemin de câbles en treillis soudé.

Un tel chemin de câbles est destiné à être disposé dans la structure d'un bâtiment industriel pour supporter des câbles électriques ou des canalisations de transport de fluide. EP-A-0 553 039 montre un chemin de câbles avec une section transversale en U, ce chemin de câbles étant réalisé par soudage de fils de chaîne, qui s'étendent parallèlement à la direction longitudinale du chemin de câbles, et de fils de trame, qui s'étendent perpendiculairement à cette direction. Ce chemin de câbles donne satisfaction, notamment en ce qui concerne la diminution des risques de blessures des câbles ou canalisations

Cependant, la masse linéaire d'un tel chemin de câbles est relativement importante et ne peut pas être diminuée sans diminuer la section des fils ronds qui le constituent. Or, une telle diminution de la section des fils reviendrait à diminuer l'inertie du chemin de câbles et à augmenter sa flexion sous charge, ce qui serait à la fois inesthétique et potentiellement dangereux car un chemin de câbles est installé généralement pour plusieurs dizaines d'années.

C'est à ces inconvénients qu'entend plus particulièrement remédier l'invention en proposant un nouveau chemin de câbles dont la masse linéaire est plus faible que celle des chemins de câbles de l'état de la technique en treillis soudé, sans pour autant que sa rigidité en soit affectée de façon défavorable.

Dans cet esprit, l'invention concerne un chemin de câbles en treillis soudé comportant des fils de chaîne métalliques s'étendant globalement selon la direction longitudinale du chemin de câbles et des fils de trame métalliques globalement perpendiculaires à cette direction, ce chemin de câbles ayant une section transversale en U, avec une base et deux branches, caractérisé en ce que les fils de chaîne constitutifs de la base sont formés par des fils à section aplatie dont la plus grande largeur est globalement perpendiculaire aux fils de chaîne au niveau de cette base.

Grâce à l'invention, les fils de chaîne métalliques à section aplatie ont leurs plus grandes dimensions orientées selon un plan globalement vertical lorsque la base du chemin de câbles est globalement horizontale, de telle sorte que les fils de chaîne travaillent sur champ pour réagir aux sollicitations dues au poids des câbles et/ou canalisations disposés dans le chemin de câbles. En d'autres termes, les fils de chaîne à section aplatie sont soumis à un effort de flexion dans le sens de leur plus grand moment d'inertie, ce qui correspond à la configuration la plus favorable et leur permet de résister efficacement au poids des câbles, à celui des canalisations et à leur propre poids.

L'invention permet donc d'utiliser des fils de chaîne de masse linéaire moins importante que celle des fils ronds alors qu'ils présentent une résistance mécanique au moins aussi importante aux efforts de flexion qu'ils subissent. En conséquence, la masse linéaire d'un chemin de câbles conforme à l'invention peut être inférieure à celle d'un chemin de câbles classique, ce qui est avantageux en termes de prix de revient, à cause du coût de la matière, et lors du transport et de l'installation d'un tel chemin de câbles.

Selon des aspects avantageux de l'invention, le chemin de câbles incorpore une ou plusieurs des caractéristiques suivantes :
- Les fils de chaîne constitutifs des branches du U sont également formés par des fils à section aplatie dont la plus grande largeur est globalement parallèle aux fils de chaîne au niveau de ces branches. En d'autres termes, les fils de chaîne à section aplatie des branches ont leurs plus grandes dimensions sensiblement parallèles aux plus grandes dimensions des fils de chaîne constitutifs de la base.
- Les fils de trame sont également formés par les fils à section aplatie dont la plus grande largeur est globalement parallèle à la direction longitudinale du chemin de câbles. Cette orientation des fils de trame permet de les cintrer relativement facilement dans la zone de jonction entre la base et les branches du U. Cette orientation permet également d'éviter que les fils de trame ne dépassent de façon trop importante au-dessus des fils de chaîne au niveau de la base, de sorte qu'ils ne risquent pas de déformer les câbles ou canalisations qui sont susceptibles de chauffer lors de l'écoulement d'un courant électrique ou d'un fluide. On diminue ainsi les risques de déformation par effet de poinçonnement. En outre, cette orientation des fils de trame diminue les efforts de friction lors de la mise en place des câbles ou canalisations dans le chemin de câbles.
- Les bouts libres des branches latérales des fils de trame sont repliés vers l'extérieur ou l'intérieur de ces branches et forment un crochet à l'intérieur duquel est disposé au moins un fil de trame. Cette disposition évite les risques de blessure des câbles ou canalisations, notamment lors de leur mise en place dans le chemin de câbles, car les arêtes tranchantes des bords libres sont orientées en direction de la base du U formée par le chemin de câbles.
- L'assemblage des fils de chaîne et des fils de trame au niveau de la base est effectué par forgeage associé à leur soudage. Ce forgeage améliore la rigidité de l'assemblage obtenu grâce à un meilleur encastrement des fils au niveau de la base.
- Les fils de chaîne et/ou les fils de trame sont réalisés dans des fils d'acier clair, des fils d'acier inox ou des fils d'acier galvanisé, laminés ou tréfilés à partir de fils ronds.

L'invention sera mieux comprise et d'autres avantages de celle-ci apparaîtront plus clairement à la lumière de la description qui va suivre de deux modes de réalisation d'un chemin de câbles conforme à son principe, donnée uniquement à titre d'exemple et faite en référence aux dessins annexés dans lesquels :
- la figure 1 est une vue en perspective d'un chemin de câbles conforme à un premier mode de réalisation de l'invention ;
- la figure 2 est une vue à plus grande échelle du détail II à la figure 1 ;
- la figure 3 est une coupe partielle de principe selon la ligne III-III à la figure 2 ;
- la figure 4 est une vue analogue à la figure 1 pour un chemin de câbles conforme à un second mode de réalisation de l'invention et
- la figure 5 est une vue à plus grande échelle du détail V à la figure 4.

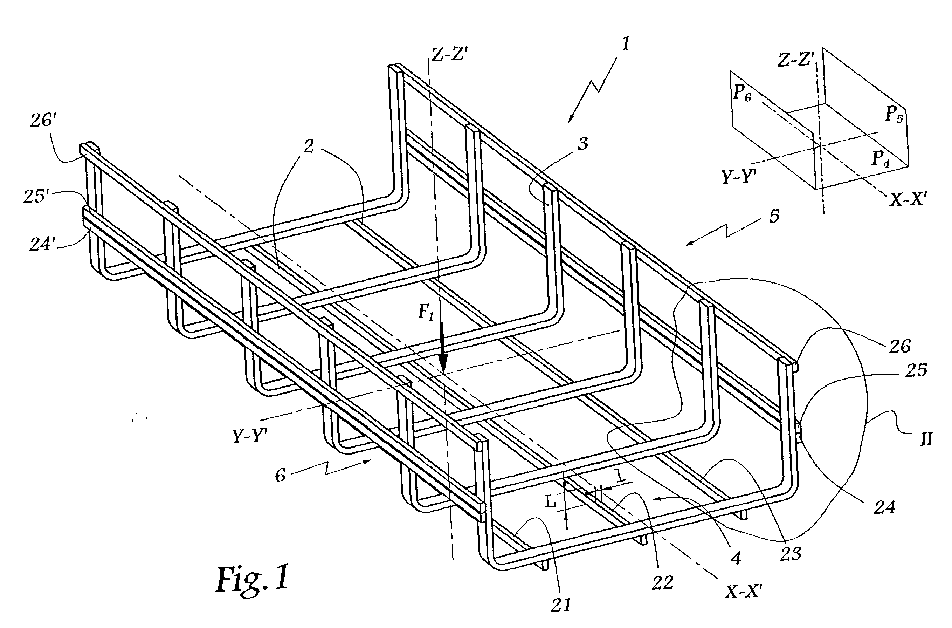

Le tronçon de chemin de câbles 1 représenté aux figures 1 à 3 est formé par soudage de fils métalliques. On note X-X' la direction longitudinale du tronçon 1. Le tronçon 1 est formé par assemblage de fils de chaîne 2, qui s'étendent globalement selon la direction X-X', et de fils de trame 3, qui s'étendant selon deux directions Y-Y' et Z-Z' perpendiculaires à la direction X-X'.

Le tronçon 1 a une section transversale globalement en forme de U avec une base 4 et deux branches 5 et 6. Dans l'exemple représenté, la base 4 est globalement plane et son plan principal P₄ peut être défini comme le plan commun aux directions X-X' et Y-Y'.

On note 21, 22 et 23 les fils de chaîne constitutifs de la base 4 du tronçon 1.

On note 24, 25, 26 les fils de chaîne constitutifs de la branche 5 et 24', 25', et 26' ceux constitutifs de la branche 6.

Les fils 21 et 23 sont formés par des fils à section aplatie dont on note L la plus grande largeur et l la plus petite largeur.

Les fils 21 à 23 sont disposés de telle sorte que leurs plus grands côtés, c'est-à-dire leurs côtés de largeur L, sont globalement perpendiculaires au plan P₄. En d'autres termes, la largeur L des fils 21 à 23 est disposée perpendiculairement aux fils de trame 3 au niveau de la base 4. Ainsi, le moment d'inertie en flexion des fils 21 à 23 est important malgré le fait que leur plus petite largeur l est sensiblement plus faible que le diamètre d'un fil rond présentant la même inertie en flexion.

Compte tenu de leur orientation, les fils 21 à 23 travaillent "sur champ" pour résister au poids des câbles ou canalisations représenté par la flèche F₁.

En pratique, les fils 21 à 23 sont obtenus par laminage de fils ronds.

Par comparaison avec un tronçon de chemin de câbles en treillis soudé réalisé avec des fils ronds de diamètre égal à 4 mm, le tronçon 1 conforme à l'invention présente une rigidité sensiblement accrue. Par comparaison à un chemin de câbles en treillis soudé réalisé à partir de fils ronds de diamètre égal à 5 mm, le tronçon 1 présente une masse linéaire sensiblement plus faible.

Les fils 24 à 26 et 24' à 26' sont disposés avec leur plus grande largeur L également perpendiculaire au plan P₄. En fait, on peut définir comme un plan P₅ un plan principal de la branche 5 et comme un plan P₆ un plan principal de la branche 6. Les fils 24 à 25 et 24' à 25' sont disposés avec leurs plus grandes largeurs L parallèles respectivement, au plan P₅ et P₆. Les fils 24 à 26 et 24' à 26' sont donc parallèles aux fils 3 au niveau des branches 5 et 6. Ainsi, les fils 24 à 26 et 24' à 26' travaillent également en compression dans le plan de leur plus grande largeur pour résister à la composante transmise aux branches 5 et 6 du poids des câbles ou canalisations disposés dans le tronçon 1.

Les fils de chaîne 3 sont également à section aplatie et l'on note, comme précédemment, L' leur plus grande largeur et l' leur plus petite largeur. Les fils 3 sont disposés avec leur plus grande largeur L' globalement parallèle à la direction X-X', de telle sorte qu'ils font saillie au-dessus des fils 21 et 23 d'une hauteur relativement faible, sensiblement égale à la largeur l'. Ainsi, ils ne constituent pas des obstacles très marqués au glissement d'un câble ou d'une canalisation dans le tronçon 1. Cette disposition permet également de cintrer avec précision les tubes 3 dans leurs zones 31 où ils sont coudés à environ 90° pour assurer la transition entre la base 4 et une branche 5 ou 6.

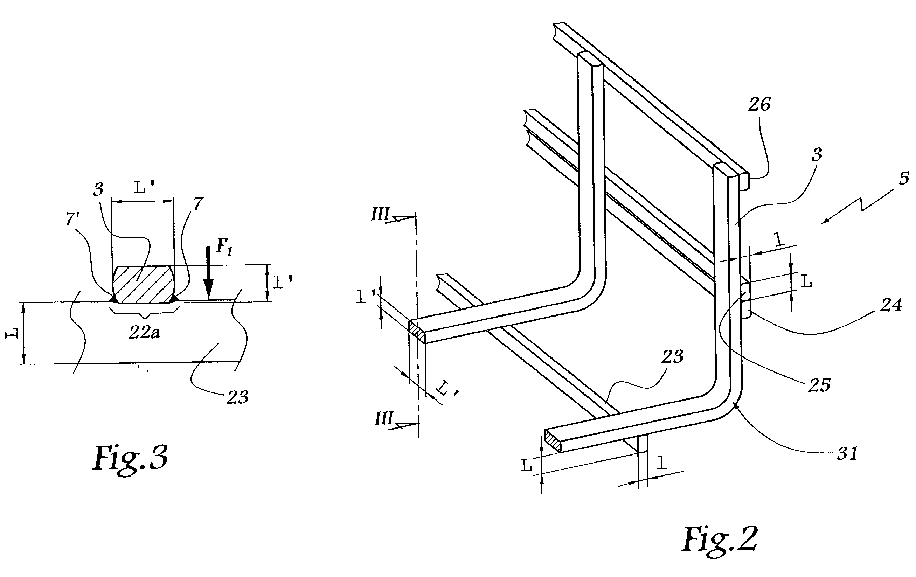

Comme il ressort plus particulièrement de la figure 3, l'assemblage d'un fil de chaîne 22 et d'un fil de trame 3 est réalisé grâce à des points de soudure 7 et 7' et à un forgeage des fils 22 et 3, notamment au niveau d'une zone supérieure 22a du fil 22 dans laquelle tend à pénétrer le fil 3.

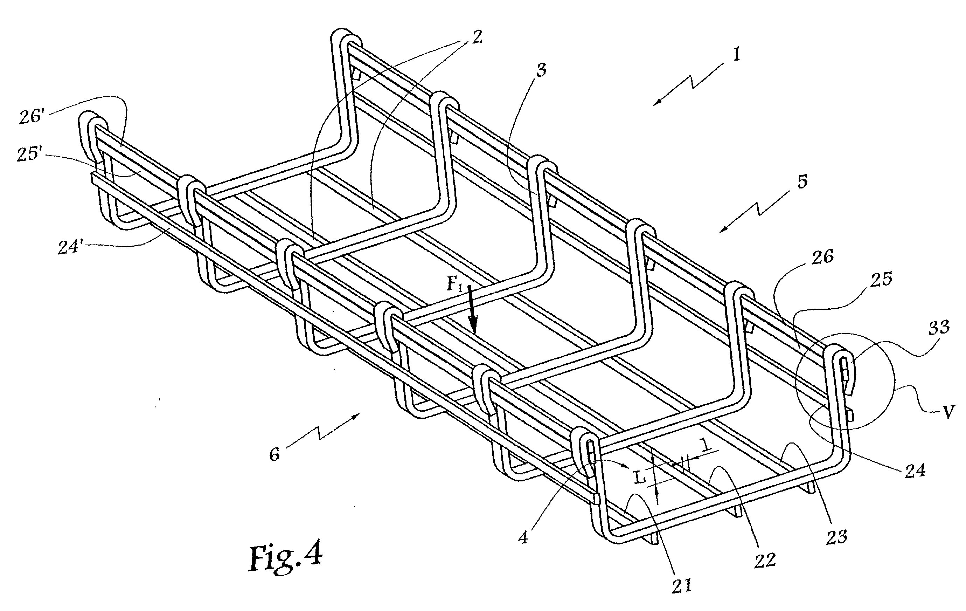

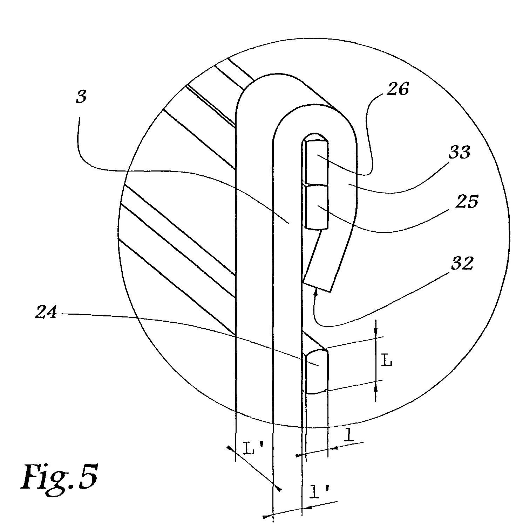

Dans le second mode de réalisation de l'invention représenté aux figures 4 et 5, les éléments analogues à ceux du premier mode de réalisation portent des références identiques. Les fils de chaîne 21, 22 et 23 de ce mode de réalisation sont également à section aplatie et travaillent sur champ pour résister au poids F₁ des objets contenus dans le tronçon 1. La plus grande largeur L des fils de chaîne est verticale, c'est-à-dire perpendiculaire aux fils de trame 3, alors que leur plus petite largeur est horizontale.

Ce mode de réalisation diffère du précédent en ce que les bords libres 32 des fils de trame 3 sont repliés vers l'extérieur des branches 5 et 6 et forment chacune un crochet 33 à l'intérieur desquels peuvent être soudés des fils de trame 25 et 26 ou 25' et 26'. Ceci permet d'éviter un contact entre les bords tranchants libres 32 des fils de trame 3 et les câbles ou canalisations lors de leur mise en place dans le tronçon 1.

Selon une variante non représentée de l'invention, les bords libres 32 des fils 3 pourraient être repliés vers l'intérieur des branches 5 et 6.

Quel que soit le mode de réalisation considéré, les fils de chaîne et/ou les fils de trame utilisés peuvent être fabriqués à partir de fils ronds, par laminage ou tréfilage. On peut utiliser des fils d'acier "clair" ayant une résistance à l'allongement de l'ordre de 50 à 60 kg. On peut également utiliser des fils en acier inoxydable de type 304 L ou 316 L. L'utilisation d'un fil pré-galvanisé de type Z 100 est également envisageable.

Quel que soit le mode de réalisation considéré et comme il ressort des figures 2 et 4, les fils de chaîne 24 à 26 et 24' à 26' des branches 5 et 6 sont en appui par des zones planes d'aires relativement importantes sur des zones planes des fils de trame 3, ce qui est sensiblement plus favorable qu'un appui quasi-ponctuel tel qu'il en existe entre deux fils ronds. En particulier, on obtient une meilleure pénétration des points ou lignes de soudure et un meilleur encastrement car la rotation du point d'assemblage entre les fils est supprimée ou, à tout le moins, fortement réduite.

L'invention est indépendante du nombre de fils de chaîne constitutifs de la base ou des branches du tronçon de chemin de câbles, ce nombre dépendant essentiellement des dimensions transversales du chemin de câbles.

## Revendications

1. Chemin de câbles en treillis soudé (1) comportant des fils de chaîne métalliques (2) s'étendant globalement selon la direction longitudinale (X-X') dudit chemin de câbles et des fils de trame métalliques (3) globalement perpendiculaires à ladite direction, ledit chemin de câbles ayant une section transversale en U, avec une base (4) et deux branches (5, 6), **caractérisé en ce que** les fils de chaîne (21-23) constitutifs de ladite base sont formés par des fils à section aplatie, dont la plus grande largeur (L) est globalement perpendiculaire auxdits fils de chaîne (3) au niveau de ladite base.

2. Chemin de câbles selon la revendication 1, **caractérisé en ce que** les fils de chaîne (24-26, 24'-26') constitutifs desdites branches (5, 6) sont formés par des fils à section aplatie, dont la plus grande largeur (L) est globalement parallèle auxdits fils de chaîne (3) au niveau desdites branches.

3. Chemin de câbles selon l'une des revendications précédentes, **caractérisé en ce que** les fils de trame (3) sont formés par des fils à section aplatie dont la plus grande largeur (L') est globalement parallèle à ladite direction longitudinale (X-X') du chemin de câbles (1).

4. Chemin de câbles selon l'une des revendications précédentes, **caractérisé en ce que** les bouts libres (32) des branches latérales des fils de trame (3) sont repliés vers l'extérieur ou l'intérieur desdites branches (5, 6) et forment un crochet (33) à l'intérieur duquel est disposé au moins un fil de trame (25, 26).

5. Chemin de câbles selon l'une des revendications précédentes, **caractérisé en ce que** l'assemblage desdits fils de chaîne (21-23) et des fils de trame (3) au niveau de ladite base (4) est effectué par forgeage et soudage.

6. Chemin de câbles selon l'une des revendications précédentes, **caractérisé en ce que** lesdits fils de chaîne (2) et/ou fils de trame (3) sont réalisés dans des fils d'acier clair, des fils d'acier inox ou des fils d'acier galvanisé, laminés ou tréfilés à partir de fils ronds.
